Europäisches Patentamt

European Patent Office

Office européen des brevets

(19)

(11) Publication number: **0 189 155**
**A1**

(12) **EUROPEAN PATENT APPLICATION**

(21) Application number: 86100628.6

(22) Date of filing: 18.01.86

(51) Int. Cl.⁴: **C 02 F 11/18**

---

(30) Priority: 21.01.85 DE 3501778

(43) Date of publication of application: 30.07.86
Bulletin 86/31

(84) Designated Contracting States: **DE FR GB IT NL**

(71) Applicant: THE DOW CHEMICAL COMPANY, 2030 Dow Center Abbott Road P.O. Box 1967, Midland, MI 48640 (US)

(72) Inventor: Eckmann, Peter, Rosenstrasse 14, D-2174 Hechtshausen (DE)
Inventor: Lindemann, Norbert, Steinkamp 46, D-2161 Friedenbeck (DE)
Inventor: Umlauff, Gerwald, Am Ziegelkamp 4, D-2160 Stade (DE)
Inventor: Adams, Hans-Norbert, Dr. Dipl.-Chem., Reidholzstrasse 30, CH-8805 Richterswil (CH)

(74) Representative: Sternagel, Hans-Günther, Dr. et al, Patentanwälte Dr. Michael Hann Dr. H.-G. Sternagel Sander Aue 30, D-5060 Bergisch Gladbach 2 (DE)

---

(54) **Method for reduction of sewage sludge from sewage clarification plants.**

(57) Sewage sludge from an activated sludge system in a sewage clarification plant is reduced by converting at least a part of the organic mass of the sludge into a biologically degradable form by treating the sludge with an acid at a pH of from about 0 to about 2, at an elevated temperature and at an elevated pressure. The dissolved organic mass shows an excellent biological degradability.

## METHOD FOR REDUCTION OF SEWAGE SLUDGE
## FROM SEWAGE CLARIFICATION PLANTS

### Background of the Invention

The present invention relates to a process for reducing sewage sludge from sewage clarification plants by converting at least a part of the organic mass of the sewage sludge into a biodegradable form by treatment of the sludge with an acid at an elevated temperature.

The biological treatment of sewage in which bacteria degrade the organic mass is a commonly employed method for the treatment of sewage. In such methods, the mass of bacteria propagates and increases the amount of the produced sewage sludge, i.e. the sludge from the presettling tank, the activated sludge, the excess sludge or the digested sludge. The disposal of the sludge mass however is often a problem.. Therefore, in past years, skilled artisans searched intensively for better and more effective ways to reduce the sludge mass, i.e. dewatering the sludge and dissolving the cell walls of the bacteria. Most of the proposed solutions to the problem employed mechanical methods e.g. pressing, filtration, flocculation or centrifuging, to dewater the sewage mass. Chemical auxiliary means were also used in such methods.

German Patent No. 30 15 243 describes a process for dewatering sludge. According to this process, the sludge is adjusted to a pH value of 0.9 to 1.5 (prior to dewatering) with a mixture of hydrochloric acid and sulphuric acid with the simultaneous addition of iron ions. The ventilation that followed this process was carried out at a temperature below 40°C.

In Japanese Patent Publication No. 81/60699 it was suggested to subject the sludge to an alkaline or acidic treatment in order to crack the cell membranes of the bacteria in the sludge. According to this process the proteins were extracted and precipitated and used as a filter to obtain dehydrogenated (dewatered) sludge.

In these prior processes, the sludge was concentrated and consequently some problems, e.g. transportation, odor, and storage was reduced but the organic portion of the sludge still remained unchanged.

A more effective process is therefore still needed to chemically decompose the organic portion of sludge or to convert the sludge into a biologically degradable form.

The further developed Baber-Colman-Wetox process (see CA 86 (26): 194489 k and the therein published literature) relates to wet oxidation of sludge in an acidic medium. The process is carried out in 0.3 weight percent sulphuric acid, based on the total weight of the sludge, at a temperature of 232°C and at a pressure of 600 psi (41 bar). On account of the high temperature and pressure, a large amount of energy is consumed. In addition, expensive equipment, e.g. made of tantalum, is needed at these severe reaction conditions.

In Japanese Patent Publication No. 76/57955 it is proposed to tread excess sludge with a mineral acid, to neutralize the hydrolysate and to subject it to an activated-sludge treatment. According to the example, 50 lit. of concentrated hydrochloric acid is added to 200 lit. of sludge. The mixture is heated for a period of 5 hours. With the acid treatment, the solids content of the sludge is reduced to 22 percent of the original amount. The remaining 78 percent of the organic portion of the solid content is dissolved during this process. The chemical oxygen demand (COD) of the solution is 6066 ppm. Subsequently the sludge is neutralized, diluted in a 15,000 lit. container and additional activated sludge is added. After ventilation for a period of 24 hours the sludge had settled. The COD of the remaining solution was 58 ppm.

A disadvantage of this process is the large amount of concentrated hydrochloric acid used from which a proton and chloride ion concentration of 2.4 mol/lit. is formed. After neutralization, the sludge contains a high concentration of salt which is destructive to the bacteria in the activated sludge.

C-33,699                    -3-

Accordingly, the sludge is greatly diluted and subsequently subjected to decomposition by activated sludge bacteria. If the great amount of dilution is taken into consideration, only 40 to 60 percent of the amount of the organic mass which is dissolved by the acid treatment, measured by COD, is decomposed by the subsequent treatment with bacteria in the activated sludge. This is another substantial disadvantage of the process.

Summary of The Invention

An object of the present invention is to develop a new process for reducing the organic mass of sewage sludge without the disadvantages of the known processes.

Surprisingly, it was found that this aim can be reached in a process for reducing sewage sludge from sewage clarification plants by converting at least a part of the organic mass of the sewage sludge into a biodegradable form by treatment of the sludge with an acid at an elevated temperature which is characterized in that the pH-value of the sludge is reduced to 0 to 2 and the sludge is treated at a temperature of from 80 to 200°C at an elevated pressure.

In the process of the present invention significantly lower acid concentrations are necessary than in the described Japanese process. At optimum process conditions up to 85 weight percent of the organic solids content of the sludge can be dissolved in the process of the present invention. The dissolved organic parts are then biologically easily degradable. Up to 85 weight percent of these dissolved parts can be degraded aerobically or anaerobically by bacteria.

Detailed Description of the Preferred Embodiments

In the process of the present invention, sewage sludge from sewage clarification plants is treated with acid at an elevated temperature. The sewage sludge can originate from the treatment or purification of industrial wastewater or raw sewage. Normally the sewage sludge contains a dry substance contents of from 0.2 to 2 weight percent. However, it is not critical that the content be within the range of from 0.2 to 2 weight percent, a larger amount of dry substance can be contained in the sludge. If desired, for example to save energy and chemicals, the sludge can be additionally dehydrated or dephlegmated before carrying out the process of the invention e.g. to a dry substance contents of up to 9, preferably from 4 to 6 weight percent. This additional dephlegmation can be carried out by any suitable process, e.g. in a centrifuge or a sieve drum decanter.

In general, any inorganic acid can be used, if strong enough, to regulate the pH-value of the sludge to the desired value. The anions of the acid should however be physiologically compatible. Mineral acids, like phosphoric acid, nitrid acid, hydrochloric acid and/or sulphuric acid, can be used. These acids can be used in technical quality and are therefore inexpensive. For acidification, from 20 to 30 weight percent hydrochloric acid and/or from 50 to 98, preferably from 70 to 98 weight percent sulphuric acid are effective.

C-33,699                    -5-

The pH-value of the sludge is adjusted to from about 0 to about 2, preferably from about 0 to about 1.5, most preferably from about 0 to about 1. The pH-value is generally below 2 and above 0. Said pH values can be provided by addition of such an amount of acid, preferably a strong acid, that the added hydronium ion concentration is about 0.01 mol to about 1.5 mol, preferably about 0.03 mol to about 1.5 mol, most preferably about 0.1 mol to about 1 mol, based on the total liters of sludge and added acid. For example, 5 weight percent concentrated sulfuric acid can be added, based on the total weight of the sludge. A pH-value above 2 is not advantageous because the degradability of the dissolved organic substances by bacteria decreases. Before, at the same time, or after, adding the acid, the sludge is heated to a temperature of from 80°C, preferably 130°C, most preferably from 150°C, up to 200°C, preferably up to 180°C, most preferably up to 160°C.

The heating can take place with any known heating means, e.g. electric heating or steam.

The thermal acid treatment is carried out at an elevated pressure. The pressure depends among other things on the temperature. Generally the pressure is in a range of from 2 bar, preferably from 4 bar, up to 10 bar, preferably up to 8 bar, most preferably up to 6 bar.

The duration of the thermal acid treatment depends among other things on the chosen temperature of the sludge mass and on the desired dissolution rate of sludge. The usual duration is from 15 minutes to 3 hours.

The sludge can be treated for longer periods of time. However, a longer treatment does not provide any substantial advantages. In particular, a treatment duration of from 1 to 2.5 hours, preferably from 2 to 2.5 hours, has proved to be most effective.

An essential improvement of the present invention is that with a considerably lower amount of acid and a treatment of shorter duration the same percentage of dissolution of the organic sludge parts can be reached as in the process according to Japanese Patent Publication No. 76/57955.

With the thermal acid treatment at least a part of the organic mass is converted into a biodegradable form. If desired, a part of the dissolved organic mass can also be chemically degraded with an oxidant. The oxidant, e.g. oxygen in diluted or undiluted form, hydrogen peroxide, peroxy disulphate or other known oxidants, can be added to the sludge. The amount of the oxidants can vary greatly but is generally an amount sufficient to complete the oxidation and is readily determined by persons skilled in the art.

The thermal acid treatment can be carried out in any suitable reactor. However, it is recommended to use non-corrosive materials. Preferred are reactors that are lined with tantalum, teflon, glass, enamel, ceramic material or other similar non-corrosive materials. Most preferred are reactors made of lined steel tube or an enamelled agitator vessel.

When the thermal acid treatment is terminated at least a part, preferably from, 70 to 90 weight percent, most preferably from 75 to 85 weight percent, of the original organic solid particles of the sludge is dissolved. The reaction mixture can afterwards be cooled and neutralized. Any suitable coolant can be used.

Neutralization can be carried out before, during, or after cooling, preferably after cooling. Any base can be used, if the cations are physiologically compatible. Basic sewage water (having a pH of greater than 7) can also be used for neutralization. Preferred are strong inorganic bases such as alkali hydroxides. Preferred are concentrated alkaline solutions or caustic cell solutions (solutions which originate from chlor-alkali cells having a concentration of about 10 weight percent). In particular sodium hydroxide or potassium hydroxide solutions in a concentration of from 5 to 50 percent are preferred for neutralization. These solutions can be used in technical quality and are therefore inexpensive.

It is not necessary to reach exactly a ph-value of 7 with the neutralization. Generally, a pH-value of from 5.5 to 9, preferably from 7 to 8.5 is effective to have the dissolved organic parts biologically degraded. Depending on whether a precipitation of specific inorganic salts, e.g. ferrous salts, is desired or not, a higher pH-value, e.g. above 9, can be chosen.

Before or during, preferably after neutralization, undissolved organic solid wastes and inorganic impurities of low solubility, e.g. sand, can be removed in a conventional manner, e.g. sedimentation, filtration or centrifuging, from the reaction mixture and disposed in a conventional manner. These residues can be concentrated and dumped as a filter cake or be dried and afterwards be burnt.

The solution which is, to a great extent, cleared from the solid wastes, and which contains the dissolved organic parts can again be put into the sewage clarification plant for biological degradation. The dissolved organic mass show excellent degradation rates in an activated sludge installation or in an anaerobic treatment of sewage by bacteria.

In order to evaluate the degradability of the dissolved organic parts the known parameters like chemical oxygen demand (COD), the biological oxygen demand (BOD) and the total organic carbon content (TOC) are measured.

The COD is determined according to the dichromate method of DIN norm 38 409. The BOD indicates the oxygen consumption of the bacteria. In the practice of the present invention the BOD was determined within 5 days ($BOD_5$). These standard measurements are described in the "German Unitary Process for Water Analysis, method H5". The TOC was determined with a Beckmann instrument, model 915, as described in ASTM method D 2579-78.

For evaluating the biodegradability of the dissolved organic parts the ratio of COD to $BOD_5$ in general is estimated. By experience, sludge from raw sewage with a ratio of COD to BOD of less than 3 are said to be readily degradable. By choosing the optimal conditions in the process of the present invention, a COD/BOD ratio of from 1.4 to 1.6 can be reached, which indicates an excellent degradability of the dissolved
organic impurities. The outstanding degradability is
confirmed by the determination of the COD decrease and
the $BOD_5$ decrease. At optimized conditions during the
thermal acid treatment, the COD in the solution can be
reduced from about 86 to about 88 percent and the $BOD_5$
in the solution from about 96 percent to about 98 percent with the biological degradation by bacteria.

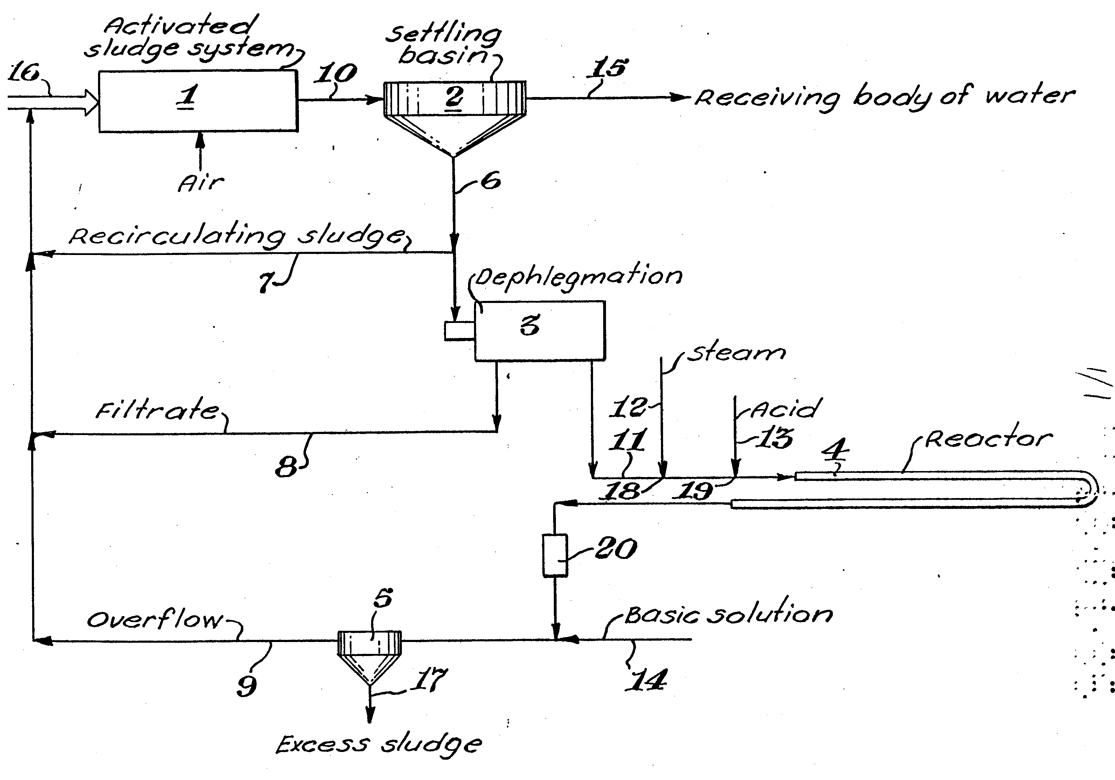

The present process is illustrated with
reference to the figure.

The invention however is not restricted to
this embodiment. The figure shows the biological
purification of sewage, which in this case is an activated sludge system. The sewage water enters the
activated sludge system (1) through conduit 16 and is
degraded aerobically by bacteria. As an alternative an
anerobic degradation by bacteria can also be used. The
purified sewage is conducted through conduit 10 to a
settling basin (2) where the formed bacteria mass and
other insoluble solid wastes settle as a sludge. The
remaining solution in the settling basin (2) can be
transported to the receiving body of water (main outfall) through conduit (15). A part of the sludge is
normally recirculated to the activated sludge system
through conduit (7).

The excess sludge from the settling basin (2)
contains from about 0.2 to about 1.0 weight percent of
suspended solid waste and is thickened in dephelgmator
(3) until a solid waste content of from about 2 to
about 4 weight percent is reached. The filtrate can be
recirculated to the activated sludge system (1) through conduit (8). The sludge from the dephlegmator (3) passes through conduit (11) through a heating area (18) where the sludge is heated to a temperature of from about 100 to about 130°C. By adding steam at a temperature of about 170°C through conduit (12), the sludge is heated to a temperature of from about 140 to about 160°C, preferably up to about 150°C.

By adding acid to the heated sludge, through conduit (13) e.g. 50 to 98 percent sulphuric acid, the pH-value of the sludge is adjusted to about 0. The acidified reaction mixture is then passed through a tube shaped reactor (4) having a length of about 6 m and a diameter of about 10 cm. The reactor is kept at a temperature of about 150°C and a pressure of about 6 bar. The speed of the flowing sludge is adjusted in such a manner that the mean dwell time in the reactor is about 2 hours. The hot liquid is then cooled to a temperature of about 50°C in cooling section (20). The liquid is neutralized with e.g. a sodium hydroxide solution from a chloride/alkali eletrolytic cell supplied through conduit (14). The undissolved organic and the inorganic solid wastes are then settled in settling tank (5). The excess sludge can be additionally dewatered by means of a filter press, or the like. Adjuncts e.g. flocculants can be used. The remaining solution (overflow) in the settling tank (5) contains about 80 percent of the originally undissolved organic parts in a dissolved and degradable form. The overflow can be recirculated to the activated sludge system (1) through conduit (9) where the organic parts are further degraded.

The degradation performance in the activated sludge system (1) depends of course not only on the properties of the treated sewage but among other things also on the time period during which the sewage remains in the activated sludge system; on the quantitative proportion of the sewage to the bacteria, and on the ventilation. However, the skilled artisan will know how to optimize these parameters in the activated sludge system.

The following examples describe the preferred embodiments of the present invention. All amounts and percentages are by weight. When calculating the TOC, BOD and COD decrease, eventual dilution effects are taken into consideration.

## Examples

Excess sludge from the settling basin with a variable solids content of from 0.2 to 1.0 weight percent is concentrated in the sludge dephlegmator until the solids content reached 2.0 to 4.0 weight percent (depending on the solids content from the settling tank). The sludge stream is acidified with 50 percent sulphuric acid in order to provide a pH-value of about 0. The sludge stream is heated to a temperature of about 150°C by passing the sludge stream through a reactor having a length of about 6 met. and a diameter of about 10 cm. The average reaction time was about 2 hours at a pressure of 6 bar. After cooling to about 50°C, the pH of the sludge stream is adjusted with caustic from chlor-alkali cells to a pH value of 8 to 9. The total organic carbon content (TOC) of the solution (which contains dissolved sludge) and, which is on top of the remaining sludge (remaining solids content), is determined before and after the thermal acid treatment. The degradation rate of the total amount of sludge and of the organic parts respectively is related to the amount of the suspended solid wastes and the organic parts of the suspended solid wastes respectively, before and after the thermal acid treatment. The COD/BOD ratio of the neutralized and filtrated reactor discharge is determined.

|  | | | Degradation Rate | | |
|  | | | Total | | |
| Example | TOC[1] | TOC[2] | sludge amount | Organic parts | COD/ BOD |
| 1 | 140 | 1520 | 49 | 76 | 1.5 |
| 2 | 150 | 1350 | 53 | 79 | 1.5 |
| 3 | 100 | 1330 | 48 | 83 | 1.5 |
| 4 | 120 | 1230 | 52 | 85 | 1.7 |

1.  Before acid treatment in ppm
2.  After acid treatment in ppm

Seven further trials were conducted under the same conditions as described in the aforedescribed example and 120 samples were withdrawn before and after the thermal acid treatment to determine the degradation rate of the organic parts of the sludge and the COD/BOD ratio in the neutralized and filtrated reactor discharge. The average value of the 120 samples was determined and is as follows:

Dissolved organic solid waste:  79.4 ± 2.1 weight percent COD/BOD proportion:                1.44 ± 0.21

. In order to determine the biological degradation rate of the neutralized and filtrated overflow after the thermal acid treatment, the reduction of TOC, COD and BOD by the biological degradation in the activated sludge system is determined.

|                      | TOC  | COD | BOD |
|----------------------|------|-----|-----|
| Number of samples    | 120  | 40  | 40  |
| Percent reduction    | 86   | 88  | 98  |
| Standard deviation   | ± 5  | ± 2 | ± 1 |

## Reference number list

1. Activated sludge system, activated sludge basin, biological treatment of sewage.
2. Settling basin.
3. Sludge dephlegmation.
4. Reactor for the treatment of the sludge.
5. Separator to separate solid components from the reaction mixture.
6. Connection pipe between settling basin and sludge dephlegmator.
7. Pipe for recirculating sludge from the settling basin to the activated sludge basin (recirculating sludge).
8. Pipe for recirculating filtrate from the sludge dephlegmator to the activated sludge basin.
9. Pipe for recirculating the reaction mixture, that has been treated with acid, then neutralized and separated from separable solid waste, to the activated sludge basin.
10. Connection pipe from the activated sludge system to the settling basin.
11. Connection pipe from the dephlegmator to the reactor for sludge treatment.
12. Pipe for supplying steam to the reactor inlet.
13. Pipe for supplying acid to the reactor inlet.

14. Pipe for supplying basic solution, i.e. caustic, to the reactor outlet or to the neutralization basin.

15. Outlet of settling basin to the receiving body of water.

16. Inlet to the activated sludge system.

17. Excess sludge outlet from the separator which separates solid waste from the neutralized reaction mixture.

18. Heating area of the sludge before the reactor.

19. Acidification area of the sludge before the reactor.

20. Cooling segment for the treated reaction mixture.

# CLAIMS

1. A process for reducing sewage sludge from sewage clarification plants by converting at least a part of the organic mass of the sewage sludge into a biodegradable form by treatment of the sludge with an acid at an elevated temperature, characterized in that the pH-value of the sludge is reduced from about 0 to about 2 and the sludge is treated at a temperature of from about 80°C to about 200°C at an elevated pressure.

2. The process of Claim 1 wherein the pressure is from about 2 to about 10 bar, and the sludge is treated for a period of time of from about 15 minutes to about 180 minutes.

3. The process of Claim 1 or 2 wherein the pH-value of the sludge is reduced to from about 0 to about 1, by the addition of hydrochloric acid or sulfuric acid.

4. The process of Claim 1 wherein the temperature is from about 130°C to about 180°C, and the pressure is from about 4 to 6 bar.

5. The process of Claim 2 wherein the sludge is treated for a period of time of from about 2 to about 2.5 hours.

6. The process of Claim 1 wherein the sludge is treated in the presence of an oxidant, preferably oxygen in its diluted or undiluted form, hydrogen peroxide or peroxy disulphate.

7. The process of Claim 1 wherein the sludge is treated in a tubular reactor at a temperature of from about 150°C to about 160°C and at a pH of from about 0 to about 0.5.

8. The process of Claim 1 wherein the sludge is concentrated to have a solids content of from about 2 to about 9 percent by weight, prior to said acid treatment.

9. The process of Claim 1 wherein the pH of the treated sludge is increased to a value of from about 5.5 to about 9.

10. The process of Claim 9 wherein the pH of the treated sludge is increased to a value of from about 7.5 to about 8.5 and the organic mass which is dissolved in water is subject to biological degradation after neutralization.

**European Patent Office**

**EUROPEAN SEARCH REPORT**

Application number

EP 86 10 0628

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 119 495 (V.D. BELYAEV et al.) <br> * Column 9, claims 1,2; column 2, lines 27-39; column 3, lines 34-55 * | 1-5 | C 02 F 11/18 |
| X | GB-A-1 275 893 (F.D. SNELL) <br> * Page 20, claims 1,2; page 2, line 120 - page 3, line 32 * | 1,2,4, 5,8 | |
| X | US-A-3 649 534 (E.I. DU PONT DE NEMOURS) <br> * Column 12, claim 1; figure 7; front page, abstract * | 1-6,10 | |
| X | AT-B- 376 698 (WAAGNER-BIRO) <br> * Page 3, claims 1-3; page 2, lines 33-34 * | 1-4,9 | TECHNICAL FIELDS SEARCHED (Int. Cl.4) <br><br> C 02 F |
| A | DE-A-2 838 386 (KURITA WATER INDUSTRIES) <br> * Page 1, claims 1,4 * | 6 | |
| A | GB-A- 653 984 (W. KING PORTEOUS) <br> * Page 1, lines 39-69 * | 7 | |

The present search report has been drawn up for all claims

| Place of search | Date of completion of the search | Examiner |
|---|---|---|
| THE HAGUE | 15-04-1986 | TEPLY J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82